# EUROPÄISCHE PATENTANMELDUNG

(11) **EP 2 839 932 A1**
(43) Veröffentlichungstag der Anmeldung: **25.02.2015**
(21) Anmeldenummer: 13180865.1
(22) Anmeldetag: 19.08.2013
(51) Int. Cl.: B25F 5/00

(54) **Erholungsdrehzahl für Diamantkernbohrgeräte nach Temperaturabschaltung (Motorüberhitzung)**

(71) Anmelder: HILTI Aktiengesellschaft, 9494 Schaan (LI)
(72) Erfinder: Koslowski, Oliver, 86932 Pürgen (DE); Königbauer, Egon, 82223 Eichenau (DE); Lieb, Konrad, 7310 Bad Ragaz (CH); Forstner, Markus, 86899 Landsberg (DE); Asmus, Torsten, 86899 Landsberg (DE); Kabza, Fabian, 80687 München (DE)
(74) Vertreter: Hilti Aktiengesellschaft Corporate Intellectual Property

(57) **Zusammenfassung**

Verfahren zum Steuern einer Werkzeugmaschine (1) beim Bearbeiten eines Werkstoffs (W) mit den Schritten
- Einstellen der Drehzahl eines Antriebs (20) der Werkzeugmaschine auf einen ersten Wert;
- Messen eines ersten Temperaturwertes;
- Vergleichen des ersten Temperaturwertes mit einem zuvor festgelegten Schwellenwert;
- Reduzieren der Drehzahl des Antriebs (20) von dem ersten Wert auf einen zweiten Wert, wenn der erste Temperaturwert den zuvor festgelegten Schwellenwert für eine zuvor festgelegte erste Zeitdauer überschreitet;
- Messen eines zweiten Temperaturwertes;
- Vergleichen des zweiten Temperaturwertes mit dem zuvor festgelegten Schwellenwert; und
- Erhöhen der Drehzahl des Antriebs von dem zweiten Wert auf den ersten Wert, wenn der zweite Temperaturwert den zuvor festgelegten Schwellenwert für eine zuvor festgelegte zweite Zeitdauer unterschreitet.

## Beschreibung

### EINLEITUNG

Die vorliegende Erfindung betrifft ein Verfahren zum Steuern einer Werkzeugmaschine beim Bearbeiten eines Werkstoffs.

Beim Bearbeiten eines Werkstoffes durch eine Werkzeugmaschine, wie beispielsweise einen Bohrhammer, eine Bohrmaschine, eine Kreissäge oder dergleichen, kann es bei einem lang andauernden Einsatz bzw. bei einer intensiven Verwendung zu einem temperaturbedingten Ausfall der Werkzeugmaschine kommen. Zum Erzeugen eines hohen Drehmoments bzw. einer hohen Leistungsabgabe benötigt der Antrieb der Werkzeugmaschine, welcher für gewöhnlich in Form eines Elektromotors verwirklicht ist, eine hohe Stromspannung aus dem Akkumulator oder (je nach Anwendung) aus dem Stromnetz. Als Folge hieraus erzeugt der als Antrieb ausgebildete Elektromotor eine Menge Wärme.

Zwar verfügen nahezu alle modernen Elektromotoren über eine Kühlvorrichtung, die den Elektromotor vor zu hohen Temperaturen und möglichen Schäden hierdurch schützen soll, jedoch sind diese Kühlvorrichtung häufig durch Bauraumbeschränkungen im Inneren des Werkzeugmaschinengehäuses in ihrer Leistungsfähigkeit beschränkt. Das bedeutet, dass bei einer anhaltend hohen Leistungsabgabe der Antrieb der Werkzeugmaschine nicht mehr optimal gekühlt werden kann. Zum Schutz des Antriebs sowie bestimmter Komponenten überwacht eine Steuereinheit mit Hilfe von Sensoren die Temperatur der Werkzeugmaschine. Für den Fall, dass eine kritische Temperatur im Inneren der Werkzeugmaschine erreicht und überschritten wird, ist die Steuereinheit in der Lage den Antrieb der Werkzeugmaschine auszuschalten, wodurch der Wärmeentwicklung des Antriebs entgegengewirkt werden kann. Im ausgeschalteten Zustand können der Antrieb und die Werkzeugmaschine insgesamt abkühlen, bis die Temperatur den kritischen Wert wieder unterschritten hat und ein Weiterarbeiten wieder möglich ist.

Eine derartige Werkzeugmaschine ist beispielsweise in der DE-Offenlegungsschrift 4 238 564 A1 gezeigt. Die DE 4 238 564 A1 offenbart dabei insbesondere ein Elektrowerkzeug mit einer Absaugeinrichtung, welche mit einer externen Vakuumquelle verbunden ist. Die Vakuumquelle dient dabei zur Erzeugung eines Kühlluftstromes durch den Elektromotor.

Nachteilig an diesem Vorgehen gemäss dem Stand der Technik ist jedoch, dass die Werkzeugmaschine eine für den Anwender unbestimmbare Zeitdauer zum Abkühlen benötigt und als Folge daraus auch das Arbeiten mit der Werkzeugmaschine für die unbestimmbare Zeitdauer unterbrochen ist. Darüber hinaus kann durch das plötzliche Ausschalten der Werkzeugmaschine bei Überhitzung vermutet werden, dass die Werkzeugmaschine gänzlich defekt sei und, obgleich diese nach dem Abkühlen wieder zur Verfügung stehen würde, die Arbeit mit dieser vermeintlich "defekten" Werkzeugmaschine nicht fortgesetzt wird.

Es ist daher Aufgabe der vorliegenden Erfindung diese vorstehend beschriebenen Nachteile zu beseitigen und ein möglichst effizienteres sowie problemloses Arbeiten mit einer Werkzeugmaschine zu ermöglichen.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängigen Ansprüchen beschrieben.

Demnach wird ein Verfahren zum Steuern einer Werkzeugmaschine beim Bearbeiten eines Werkstoffs mit den Schritten
- Einstellen der Drehzahl eines Antriebs der Werkzeugmaschine auf einen ersten Wert;
- Messen eines ersten Temperaturwertes;
- Vergleichen des ersten Temperaturwertes mit einem zuvor festgelegten Schwellenwert;
- Reduzieren der Drehzahl des Antriebs von dem ersten Wert auf einen zweiten Wert, wenn der erste Temperaturwert den zuvor festgelegten Schwellenwert für eine zuvor festgelegte erste Zeitdauer überschreitet;
- Messen eines zweiten Temperaturwertes;
- Vergleichen des zweiten Temperaturwertes mit dem zuvor festgelegten Schwellenwert; und
- Erhöhen der Drehzahl des Antriebs von dem zweiten Wert auf den ersten Wert, wenn der zweite Temperaturwert den zuvor festgelegten Schwellenwert für eine zuvor festgelegte zweite Zeitdauer unterschreitet
bereitgestellt.

Entsprechend einer weiteren vorteilhaften Ausgestaltungsform der vorliegenden Erfindung kann ein Festlegen des Schwellenwerts in Abhängigkeit zu der Umgebungstemperatur der Werkzeugmaschine vorgesehen sein. Hierdurch kann beispielsweise verhindert werden, dass der Schwellenwert zu niedrig festgelegt wird und dieser zu früh bzw. zu schnell überschritten wird.

Um den Anwender der Werkzeugmaschine über das Vorliegen eines Überschreitens oder eines Unterschreitens des zuvor festgelegten Schwellenwerts zu informieren und ihm die ordnungsgemässe Funktionsweise der Werkzeugmaschine anzuzeigen, kann ein Anzeigen des Überschreitens oder des Unterschreitens des zuvor festgelegten Schwellenwerts mittels einer Datenanzeigeeinrichtung der Werkzeugmaschine vorteilhaft sein. Die Datenanzeigeeinrichtung kann dabei in Form eines Anzeigeelements, eines Displays, wenigstens einer Lampe oder auch in Form eines akustischen Signalgebers verwirklicht sein.

Die vorliegende Erfindung wird bezüglich vorteilhafter Ausführungsbeispiele näher erläutert, hierbei zeigt
- Fig. 1: Seitenansicht einer Werkzeugmaschine mit einem Antriebe und einer Steuereinheit; und
- Fig. 2: Diagramm zu dem erfindungsgemässen Verfahren zum Steuern einer Werkzeugmaschine beim Bearbeiten eines Werkstoffs.

Gleiche Bauteile sind in den Figuren sowie in der nachfolgenden Beschreibung mit gleichen Bezugszeichen versehen.

### AUSFÜHRUNGSBEISPIELE

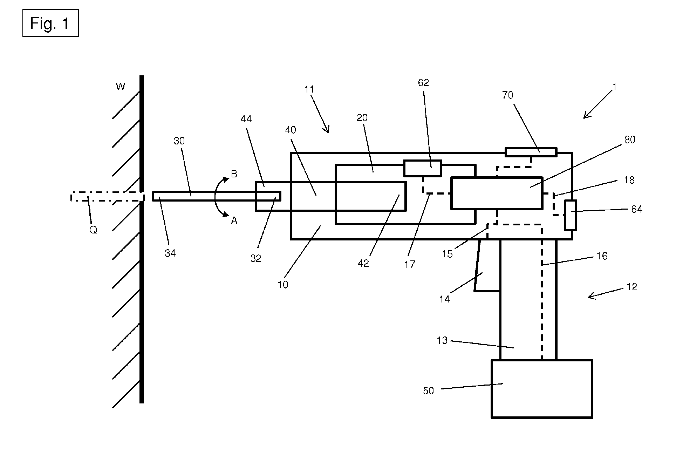

Fig. 1 zeigt eine Werkzeugmaschine 1, welche ein Gehäuse 10, einen Antrieb 20, ein Werkzeug 30, eine Antriebswelle 40, eine Energiequelle 50, ein erster Temperatursensor 62, ein zweiter Temperatursensor 64, eine Datenanzeigeeinrichtung 70 und eine Steuereinheit 80 enthält.

Das Gehäuse 10 besteht im Wesentlichen aus einem ersten Anteil 11, in dem sich der Antrieb 20, der erste Temperatursensor 62, der zweite Temperatursensor 64 und die Steuereinheit 80 befindet, sowie aus einem zweiten Anteil 12, der einen Handgriff 13, einen Schalter 14 und die Energiequelle 50 umfasst. Der Schalter 14 ist mit der Steuereinheit 80 über eine Leitung 15 verbunden, so dass durch ein Betätigen des Schalters 14 die Steuereinheit 80 den Antrieb 20 in Betrieb nimmt. Durch ein Loslassen des Schalters 14 wird der Antrieb 20 durch die Steuereinheit 80 angehalten. Die Steuereinheit 80 dient somit primär der Steuerung des Antriebs 20.

Der Antrieb 20 ist als Elektromotor und das Werkzeug 30 ist als Bohrer ausgebildet. Die Energiequelle 50 ist als Akkumulator ausgestaltet. Alternativ kann die Energiequelle 50 jedoch auch eine mit einem Netzkabel verbundene Stromquelle (Steckdose) sein. Sowohl das Netzkabel als auch die Stromquelle sind in den Figuren nicht dargestellt. Die Energiequelle 50 versorgt den Antrieb 20 über eine Leitung 16 mit Strom.

Die Antriebswelle 40 enthält ein erstes Ende 42 und ein zweites Ende 44, wobei das erste Ende 42 so mit dem als Elektromotor ausgebildeten Antrieb 20 verbunden ist, dass ein in dem Elektromotor 20 erzeugtes Drehmoment auf das als Bohrer ausgestaltete Werkzeug 30 übertragen wird. Der Bohrer 30 ist mit einem ersten Ende 32 mit dem zweiten Ende 44 der Antriebswelle 40 verbunden. Durch den Antrieb 20 und der Antriebswelle 40 dreht sich der Bohrer 30 entweder in Pfeilrichtung A oder B. Ein zweites Ende 34 des Bohrers 30 dient dazu ein Loch Q in einen Werkstoff W zu bohren. Als Werkstoff W kann beispielsweise Beton, Stein, Holz oder ähnliches vorgesehen sein.

Die Datenanzeigeeinrichtung 70 ist an dem ersten Anteil 11 des Gehäuses 10 positioniert und in Form eines Displays ausgebildet. Auf der als Display ausgebildeten Datenanzeigeeinrichtung 70 kann der (nicht gezeigte) Anwender der Werkzeugmaschine 1 Daten, Parameter und Informationen mit Bezug auf die Werkzeugmaschine 1 ablesen.

Der erste Temperatursensor 62 ist so mit dem Elektromotor 20 verbunden, dass dieser ständig die Temperatur des Elektromotors 20 messen kann. Darüber hinaus steht der erste Temperatursensor 62 auch über die Leitung 17 in Verbindung mit der Steuereinheit 80, um die gemessenen Temperaturwerte an die Steuereinheit 80 zu übermitteln.

Der zweite Temperatursensor 64 ist so mit dem Gehäuse 10 der Werkzeugmaschine 1 verbunden, dass dieser die Umgebungstemperatur messen kann. Der zweite Temperatursensor 64 ist dabei über eine Leitung 18 mit der Steuereinheit 80 verbunden. Über die Verbindung 18 können gemessene Temperaturwerte an die Steuereinheit 80 gesendet werden.

In der Steuereinheit 80 sind Schwellwerte hinterlegt, durch deren Abgleich mit den gemessenen Temperaturwerten die Steuereinheit 80 eine kritische Temperaturentwicklungen in der Werkzeugmaschine 1 feststellen kann. Die Festlegung der Schwellenwerte steht in Abhängigkeit zu der jeweiligen Umgebungstemperatur der Werkzeugmaschine 1, die durch den zweiten Temperatursensor 64 gemessen wird. Da bedeutet, dass bei einer niedrigen Umgebungstemperatur die Schwellenwerte entsprechend niedrig gewählt und festgelegt werden. Im Gegensatz dazu werden bei hohen Umgebungstemperaturen die Schwellenwerte entsprechend hoch gewählt und festgelegt.

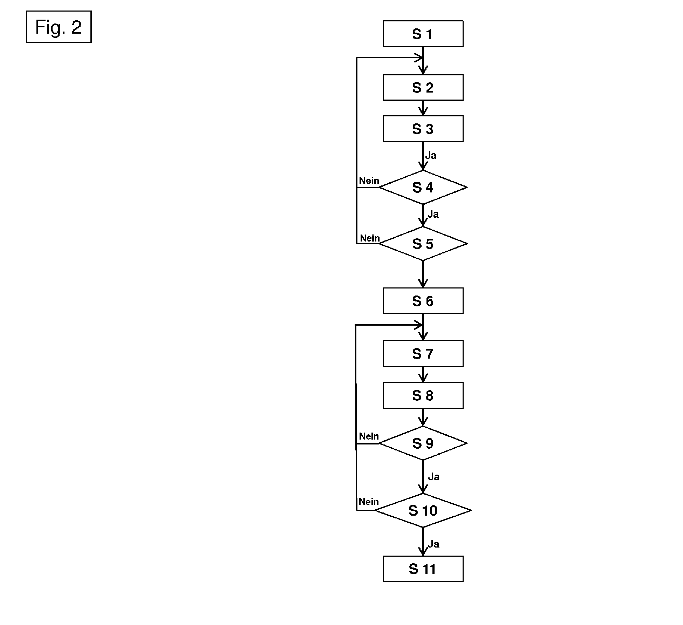

Fig. 2 zeigt ein Ablaufdiagramm des Verfahrens zum Steuern der Werkzeugmaschine 1 beim Bearbeiten eines Werkstoffs W.

In Schritt **S1** wird zunächst die Drehzahl des Antriebs 20 auf einen Wert 1 festgelegt. Der Wert 1 entspricht dabei einer mittleren bis hohen Arbeitsdrehzahl.

In Schritt **S2** wird ein erster Temperaturwert des als Elektromotor ausgebildeten Antriebs 20 durch den ersten Temperatursensor 62 gemessen.

In Schritt **S3** wird der erste durch den ersten Temperatursensor 62 gemessene Temperaturwert des Antriebs 20 mit dem zuvor festgelegten Schwellenwert abgeglichen.

In Schritt **S4** wird dann festgestellt, ob der erste Temperaturwert des Antriebs 20 den Schwellenwert überschritten hat oder nicht.

Für den Fall, dass der Schwellenwert nicht überschritten wurde, wird das Verfahren mit dem Schritt **S2** fortgesetzt.

Für den Fall, dass der Schwellenwert überschritten wurde, folgt der Schritt **S5,** in dem festgestellt wird, ob der Schwellenwert auch für eine zuvor festgelegte erste Zeitdauer überschritten wurde.

Für den Fall, dass der Schwellenwert nicht die zuvor festgelegte erste Zeitdauer überschritten wurde, folgt anschliessend ebenfalls wieder der Schritt **S2.**

Wenn jedoch festgestellt wird, dass der Schwellenwert die zuvor festgelegte erste Zeitdauer überschritten hat, folgt der Schritt **S6,** in dem die Drehzahl des Antriebs 20 von dem Wert 1 auf einen Wert 2 reduziert wird. Der Wert 2 entspricht dabei einer niedrigen Arbeitsdrehzahl.

Mit der niedrigen Arbeitsdrehzahl kann einerseits erreicht werden, dass der Antriebe 20 der Werkzeugmaschine 1 abkühlen kann, da nun weniger Strom von dem Antrieb 20 aus dem Akkumulator 50 gezogen wird, und anderseits das Arbeiten mit der Werkzeugmaschine 1 fortgesetzt werden kann. Zwar sind die Drehzahl und damit die Leistungsabgabe des Antriebs 20 entsprechend verringert, jedoch wird die Werkzeugmaschine 1 nicht vollständig abgeschaltet, wodurch ein langsameres Arbeiten weiterhin möglich ist.

Darüber hinaus wird mit Hilfe der als Display ausgestalteten Datenanzeigeeinrichtung 70 dem Anwender der aktuelle Status der Werkzeugmaschine 1 angezeigt. Hierdurch erfährt der Anwender, dass die Werkzeugmaschine 1 zurzeit überhitzt ist und die niedrige Arbeitsdrehzahl nicht die Folge einer Beschädigung der Werkzeugmaschine 1 ist, sondern dass die niedrige Arbeitsdrehzahl zum Abkühlen des Antriebs 20 und damit zum Verhindern einer Beschädigung dient.

Hierbei ist zu beachten, dass die Länge der ersten Zeitdauer in Abhängigkeit zu dem Schwellenwert und der Umgebungstemperatur der Werkzeugmaschine 1 steht. Das bedeutet, dass eine lange erste Zeitdauer gewählt und festgelegt wird, wenn der Schwellenwert und die Umgebungstemperatur entsprechend niedrig sind. Eine kurze erste Zeitdauer wird hingegen gewählt und festgelegt, wenn der Schwellenwert und die Umgebungstemperatur entsprechend hoch sind. Mit einer langen erste Zeitdauer kann erreicht werden, dass (wenn der Schwellenwert und die Umgebungstemperatur niedrig sind) nicht frühzeitig die Drehzahl des Antriebs 20 von dem Wert 1 auf einen Wert 2 reduziert wird, nur weil ein niedriger Schwellwert kurzzeitig überschritten wurde. Für ein effizientes Arbeiten mit der Werkzeugmaschine 1 mit einer hohen Drehzahl kann ein einmaliges und kurzzeitiges Überschreiten des Schwellwerts toleriert werden, da für gewöhnlich das kurze Überschreiten noch keine Beschädigung für die Werkzeugmaschine 1 zur Folge hat.

Mit einer kurzen ersten Zeitdauer kann dagegen erreicht werden, dass (wenn der Schwellenwert und die Umgebungstemperatur hoch sind) die Drehzahl des Antriebs 20 von dem Wert 1 auf einen Wert 2 rechtzeitig reduziert wird, um in Folge der hohen Temperaturen mögliche Beschädigungen an der Werkzeugmaschine 1 vermieden werden.

Anschliessend folgt der Schritt **S7,** in dem ein zweiter Temperaturwert des Antriebs 20 durch den ersten Temperatursensor 62 gemessen wird.

In Schritt **S8** wird der zweite durch den ersten Temperatursensor 62 gemessene Temperaturwert des Antriebs 20 mit dem zuvor festgelegten Schwellenwert abgeglichen.

In Schritt **S9** wird dann festgestellt, ob der zweite Temperaturwert des Antriebs 20 immer noch den Schwellenwert überschreitet oder nicht mehr.

Für den Fall, dass der Schwellenwert immer noch überschritten ist, wird das Verfahren mit dem Schritt **S7** fortgesetzt.

Für den Fall, dass der zweite Temperaturwert nicht mehr den Schwellwert überschreitet, wird im Schritt **S10** festgestellt, ob eine zuvor festgelegte zweite Zeitdauer überschritten wurde.

Wenn der zweite Temperaturwert des Antriebs 20 den Schwellwert nicht wenigstens für die zweite Zeitdauer unterschreitet, wird das Verfahren ebenfalls mit dem Schritt **S7** fortgesetzt.

Wenn jedoch der zweite Temperaturwert des Antriebs 20 den Schwellwert mehr als für die zweite Zeitdauer unterschreitet, wird das Verfahren mit dem Schritt **S11** fortgesetzt. Dies bedeutet, dass die Werkzeugmaschine 1 nun in Folge des Betriebs mit einer niedrigen Drehzahl wieder ausreichend abgekühlt ist. Im Schritt **S11** wird die die Drehzahl des Antriebs 20 von dem niedrigeren Wert 2 (niedrige Arbeitsdrehzahl) wieder auf den höheren Wert 1 (mittlere bis hohe Arbeitsdrehzahl) erhöht.

## Patentansprüche

1. Verfahren zum Steuern einer Werkzeugmaschine (1) beim Bearbeiten eines Werkstoffs (W) mit den Schritten:
- Einstellen der Drehzahl eines Antriebs (20) der Werkzeugmaschine (1) auf einen ersten Wert;
- Messen eines ersten Temperaturwertes;
- Vergleichen des ersten Temperaturwertes mit einem zuvor festgelegten Schwellenwert;
- Reduzieren der Drehzahl des Antriebs (20) von dem ersten Wert auf einen zweiten Wert, wenn der erste Temperaturwert den zuvor festgelegten Schwellenwert für eine zuvor festgelegte erste Zeitdauer überschreitet;
- Messen eines zweiten Temperaturwertes;
- Vergleichen des zweiten Temperaturwertes mit dem zuvor festgelegten Schwellenwert;
und
- Erhöhen der Drehzahl des Antriebs (20) von dem zweiten Wert auf den ersten Wert, wenn der zweite Temperaturwert den zuvor festgelegten Schwellenwert für eine zuvor festgelegte zweite Zeitdauer unterschreitet.

2. Verfahren nach Anspruch 1,
**gekennzeichnet durch** Festlegen des Schwellenwerts in Abhängigkeit zu der Umgebungstemperatur der Werkzeugmaschine (1).

3. Verfahren nach Anspruch 1,
**gekennzeichnet durch** Anzeigen des Überschreitens oder des Unterschreitens des zuvor festgelegten Schwellenwerts mittels einer Datenanzeigeeinrichtung der Werkzeugmaschine (1).
